# EUROPÄISCHE PATENTSCHRIFT

(11) **EP 4 201 114 B1**
(45) Veröffentlichungstag und Bekanntmachung des Hinweises auf die Patenterteilung: **13.08.2025**
(21) Anmeldenummer: 22733528.8
(22) Anmeldetag: 25.05.2022
(51) Int. Cl.: H04L 1/08, H04W 52/02, H04W 88/06

(54) **VERFAHREN ZUR KOMMUNIKATION WENIGSTENS EINES MOBILFUNKGERÄTS MIT EINER MOBILFUNKNETZWERKBASISSTATION**
METHOD FOR THE COMMUNICATION OF AT LEAST ONE MOBILE COMMUNICATIONS DEVICE WITH A MOBILE COMMUNICATIONS NETWORK BASE STATION
PROCÉDÉ POUR LA COMMUNICATION D'AU MOINS UN DISPOSITIF DE COMMUNICATION MOBILE AVEC UNE STATION DE BASE DE RÉSEAU DE COMMUNICATION MOBILE

(30) Priorität: 15.06.2021 DE 102021003075
(43) Veröffentlichungstag der Anmeldung: 28.06.2023
(73) Patentinhaber: Mercedes-Benz Group AG, 70372 Stuttgart (DE)
(72) Erfinder: AYDIN, Osman, 70771 Leinfelden-Echterdingen (DE)
(74) Vertreter: Novagraaf Group
(86) Internationale Anmeldenummer: PCT/EP2022/064324
(87) Internationale Veröffentlichungsnummer: WO 2022/263141

(56) Entgegenhaltungen:
- WO-A1-2017/082801
- US-A1- 2018 103 426
- STEFAN RUNESON ET AL: "Coverage Enhancement for Vehicles", ARXIV.ORG, CORNELL UNIVERSITY LIBRARY, 201 OLIN LIBRARY CORNELL UNIVERSITY ITHACA, NY 14853, 8 January 2021 (2021-01-08), XP081855131

## Beschreibung

Die Erfindung betrifft ein Verfahren zur Kommunikation wenigstens eines Mobilfunkgeräts mit einer Mobilfunknetzwerkbasisstation nach der im Oberbegriff von Anspruch 1 näher definierten Art sowie ein Fahrzeug mit wenigstens einem Mobilfunkgerät.

Bei dem 3rd Generation Partnership Project (3GPP) handelt es sich um eine weltweite Kooperation von Standardisierungsgremien zur Standardisierung im Mobilfunk. Das 3GPP erstellt technische Spezifikationen, die alle Aspekte der Mobilfunktechnik so präzise beschreiben, dass Mobilfunkgeräte verschiedenster Hersteller in allen Mobilfunknetzen weltweit fehlerfrei funktionieren. Bei den hierdurch definierten Mobilfunkstandards handelt es sich beispielsweise um GSM, UMTS, oder LTE. Die Mobilfunkstandards werden auch als 2G, 3G und 4G bezeichnet. Mit fortschreitender Entwicklung ist auch das Übertragen vergleichsweise hoher Datenmengen möglich, beispielsweise über den aktuell eingeführten Mobilfunkstandard 5G. Mit fortschreitender Forschung und der Einführung zukünftiger Technologien wie 6G, 7G oder folgender Mobilfunkstandards ist auch noch mit einer weiteren Zunahme der über Mobilfunk übermittelten Datenrate zu rechnen.

Die Übermittlung von Daten erfordert dabei das Vorliegen einer ausreichenden Funksignalstärke. Nimmt eine Entfernung eines Mobilfunkgeräts zu einer Sendestation zu, so schwächt sich dieses Mobilfunksignal zunehmenden ab, bis das Mobilfunksignal zu schwach ist, um hohe Datenströme zu übermitteln. Befinden sich Hindernisse wie beispielsweise Hochhäuser, Brücken, Hügel oder Bäume sowie Störquellen, beispielsweise Quellen von elektromagnetischer Strahlung wie Transformatoren im Bereich zwischen Mobilfunkgerät und Basisstation, so kann das Mobilfunksignal zusätzlich beeinträchtigt werden.

Zur Sicherstellung einer erfolgreichen Kommunikation zwischen Mobilfunkgerät und Basisstation bei einem vergleichsweise schwachen Mobilfunksignal, hat die 3GPP die sogenannte Abdeckungsverbesserung, auch als Coverage Enhancement bezeichnet, eingeführt. Mittels Coverage Enhancement ist es möglich, im Vergleich niedrige Datenraten bei einem vergleichsweise schwachen Mobilfunksignal sicher und zuverlässig über vergleichsweise große geografische Reichweiten austauschen zu können. Die Datenübertragung erfolgt dabei mit einer vergleichsweise geringen Sendeleistung, wodurch wenig Strom verbraucht wird. Zur Durchführung von Coverage Enhancement muss eine entsprechende Basisstation und ein jeweiliges Mobilfunkgerät spezielle Sende- und Empfangshardware aufweisen. Coverage Enhancement kann beispielsweise über LTE-M, LTE-MTC beziehungsweise LTE-Cut-M oder auch durch neuere Standards wie LPWAN oder NB-IoT realisiert werden.

Die Erhöhte Reichweite unter Anwendung von Coverage Enhancement basiert auf der mehrmaligen Übertragung der selben Daten. Je schwächer ein Mobilfunksignal zwischen Mobilfunkgerät und Basisstation, desto mehr Wiederholungen sind notwendig, um eine erfolgreiche Datenübertragung zwischen den beiden Kommunikationsteilnehmern zu gewährleisten. Das erneute Übertragen derselben Daten nimmt zur Verfügung stehende Bandbreite in Anspruch, was ein Grund für die nur vergleichsweise gering übertragbare Datenrate ist. Coverage Enhancement eignet sich daher nur für Anwendungen, bei denen vergleichsweise wenig Daten, bzw. eine geringe Datenrate auch bei einer schlechten Empfangssituation zuverlässig übertragen werden muss.

Solche Anwendungsfälle finden sich in der Automobilbranche. So werden mit zunehmender Digitalisierung auch Fahrzeuge zunehmend vernetzt, welche dann dazu in der Lage sind, über eine Fahrzeug-zu-Fahrzeug-Schnittstelle Daten mit anderen Fahrzeugen auszutauschen, über eine Fahrzeug-zu-Infrastruktur-Schnittstelle Daten mit Infrastruktur, wie beispielsweise eine Mautstation, auszutauschen oder über eine Fahrzeug-zu-Netzwerk-Schnittstelle Informationen über Mobilfunk zu übermitteln. Fährt ein solches kommunikationsfähiges Fahrzeug auf einer Fahrtroute in ein Funkloch hinein, so können über einen üblichen Mobilfunkstandard wie LTE oder 5G gegebenenfalls keine Informationen übertragen werden, da die Empfangsqualität zu schlecht ist. Mit Hilfe von Coverage Enhancement lässt sich eine erfolgreiche Kommunikation zwischen Mobilfunkgerät und Mobilfunknetzwerkbasisstation jedoch für größere Distanzen sicherstellen.

Aufgrund der reduzierten Datenrate können jedoch nur ausgewählte Informationen übertragen werden. Für eine Kommunikation unter Anwendung von Coverage Enhancement kommen aufgrund ihrer Relevanz beispielsweise folgende Informationen in Frage: Fahrzeugstatusupdates, ein Entriegelungs- oder Verriegelungsbefehl zum Öffnen oder Verschließen von Fahrzeugtüren, und/oder Fahrzeugdiagnosedaten.

Aus der WO 2018/213166 A1 ist ein Verfahren zur Überwachung einer Funksignalqualität bei der Verwendung von Coverage Enhancement bekannt. Mit Hilfe des in der Druckschrift beschriebenen Verfahrens wird ein Coverage Enhancement Level so verändert, dass eine zur Durchführung von Coverage Enhancement erforderliche Datenrate optimal an einer aktuell vorliegenden Empfangssignalstärke angepasst wird. Entfernt sich ein Mobilfunkgerät zu einer Mobilfunknetzwerkbasisstation, so wird ein hohes Coverage Enhancement Level gewählt, was mit einer hohen Wiederholrate eines zu übermittelnden Mobilfunksignals einhergeht. Nähert sich das Mobilfunkgerät der Mobilfunknetzwerkbasisstation hingegen an, so wird ein vergleichsweise niedriges Coverage Enhancement Level gewählt, was mit einer niedrigeren Datenwiederholrate verbunden ist. Hierdurch können Netzwerkkommunikationsressourcen eingespart und damit optimal genutzt werden.

Ferner offenbart die WO 2017/082801 A1 Verfahren zur adaptiven Konfiguration von Nachbarzellen, um einen Betrieb von Nutzergeräten mit einer verbesserten Abdeckung zu ermöglichen. Dabei wird ein im Nutzergerät aktiver Grad eines verwendeten Abdeckungsverbesserungsmodus ermittelt und in Abhängigkeit dessen die Anzahl an Wiederholungen eines zwischen dem Nutzergerät und einem mit dem Nutzergerät kommunizierenden Ziel-Netzwerkknoten auszutauschenden Signals im Ziel-Netzwerkknoten eingestellt.

Ferner offenbart die US 2018/0103426 A1 die erweiterte Signalabdeckung und Batteriedauer eines Nutzerendgeräts. Dabei ermittelt ein Nutzerendgerät wie ein Smartphone die Signalstärke eines Drahtlossignals und den Ladezustand seines elektrischen Energiespeichers und gleicht die Werte mit jeweiligen Grenzwerten ab. Weisen die aktuell gemessenen Größen ein bestimmtes Verhältnis zu den jeweiligen Grenzwerten auf, lässt sich wahlweise Coverage Enhancement oder ein Batteriesparmodus aktivieren.

Zudem offenbart: STEFAN RUNESON ET AL: "Coverage Enhancement for Vehicles", ARXIV.ORG, CORNELL UNIVERSITY LIBRARY, 201 OLIN LIBRARY CORNELL UNIVERSITY ITHACA, NY 14853, 8. Januar 2021 (2021-01-08), die Verwendung von Coverage Enhancement durch eine Telekommunikationseinheit in einem Fahrzeug. Coverage Enhancement wird dabei in Abhängigkeit einer Empfangssignalstärke des zugrunde liegenden Mobilfunknetzes aktiviert, also wenn sich das Fahrzeug außerhalb einer Region mit normaler Netzabdeckung aufhält.

Der vorliegenden Erfindung liegt die Aufgabe zugrunde, ein verbessertes Verfahren zur Kommunikation wenigstens eines Mobilfunkgeräts mit einer Mobilfunknetzwerkbasisstation anzugeben, mit dessen Hilfe eine Kommunikation zwischen Mobilfunkgerät und Mobilfunknetzwerkbasisstation im Falle, dass eine thermische Beschädigung des Mobilfunkgeräts in einem üblichen Betriebsmodus droht und/oder eine zum Betreiben des Mobilfunkgeräts erforderliche Energiereserve zur Neige geht, weiter aufrecht erhalten werden kann.

Erfindungsgemäß wird diese Aufgabe durch ein Verfahren zur Kommunikation wenigstens eines Mobilfunkgeräts mit einer Mobilfunknetzwerkbasisstation mit den Merkmalen des Anspruchs 1 sowie ein Fahrzeug mit wenigstens einem Mobilfunkgerät mit den Merkmalen des Anspruchs 8 gelöst. Vorteilhafte Ausgestaltungen und Weiterbildungen ergeben sich aus den hiervon abhängigen Ansprüchen.

Bei einem Verfahren zur Kommunikation wenigstens eines Mobilfunkgeräts mit einer Mobilfunknetzwerkbasisstation der eingangs genannten Art, aktiviert das Mobilfunkgerät in Abhängigkeit einer zum Betreiben des Mobilfunkgeräts zur Verfügung stehenden elektrischen Energiemenge und/oder einer kritischen Temperatur des Mobilfunkgeräts einer Komponente des Mobilfunkgeräts und/oder einer Umgebungstemperatur um das Mobilfunkgerät einen Abdeckungsverbesserungs-Modus, in welchem das Mobilfunkgerät mit der Mobilfunknetzwerkbasisstation Informationen unter Einsatz von Abdeckungsverbesserung austauscht, wobei die Abdeckungsverbesserung die mehrmalige Übertragung derselben Informationen mit einer vergleichsweise geringen Sendeleistung vorsieht. Zum Betreiben des Mobilfunkgeräts im Abdeckungsverbesserungs-Modus wird weniger Energie benötigt, als zur Kommunikation über einen üblichen Mobilfunkstandard wie 2G bis 5G oder auch künftige Mobilfunkstandards wie 6G oder dergleichen.

Fällt eine zum Betreiben des Mobilfunkgeräts bereitstehende elektrische Energiemenge unterhalb eines festgelegten kritischen Werts, so schaltet das Mobilfunkgerät in den Abdeckungsverbesserungs-Modus und beendet eine Kommunikation mit der Mobilfunknetzwerkbasisstation über einen üblichen Mobilfunkstandard. Somit wird ein Energieverbrauch des Mobilfunkgeräts gesenkt. Da das Mobilfunkgerät somit weniger Strom verbraucht, entleert es auch einen die elektrische Energiemenge bevorratenden Energiespeicher langsamer und lässt sich somit für einen längeren Zeitraum verwenden. Dabei kann der Energiespeicher vom Mobilfunkgerät umfasst sein und/oder in Form eines externen Energiespeichers an das Mobilfunkgerät angeschlossen sein.

Wird der Energieverbrauch des Mobilfunkgeräts durch Aktivieren der auf Abdeckungsverbesserung, auch als Coverage Enhancement bezeichnet, basierten Kommunikation gesenkt, so sinkt auch eine von Elektronikkomponenten durch Dissipation von Strom abgegebene Wärmeleistung. Hierdurch wird das Risiko einer thermischen Beschädigung des Mobilfunkgeräts gesenkt.

Um eine drohende Überhitzung des Mobilfunkgeräts beziehungsweise Komponenten des Mobilfunkgeräts rechtzeitig festzustellen, werden entsprechende Bauteile und/oder eine Umgebungstemperatur um das Mobilfunkgerät überwacht. Dabei können auch mehrere Temperaturen gleichzeitig berücksichtigt werden. Die zum Erreichen der kritischen Temperatur führende Abwärme kann sowohl vom Mobilfunkgerät und seinen einzelnen Komponenten abgegeben werden, als auch von in der Nähe des Mobilfunkgeräts angeordneten weiteren Vorrichtungen wie beispielsweise eine Recheneinheit, ein Batteriemodul, ein thermisches Aggregat oder dergleichen. Falls das alleinige Aktivieren des Abdeckungsverbesserungs-Modus nicht ausreicht, um eine Überhitzung des Mobilfunkgeräts zu verhindern, so kann zusätzlich auch der Betrieb der weiteren Vorrichtung reduziert, eingeschränkt oder beendet werden. Hierdurch lässt sich an das Mobilfunkgerät abgegebene Wärmeleistung noch weiter reduzieren.

Generell ist es auch denkbar, dass der Abdeckungsverbesserungs-Modus aktiviert wird, wenn die kritische Temperatur unterschritten wird.

Eine vorteilhafte Weiterbildung des Verfahrens sieht vor, dass die zum Betreiben des Mobilfunkgeräts verwendete elektrische Energie von einer Fahrzeugbatterie bezogen wird. Das Mobilfunkgerät kann dabei in ein die Fahrzeugbatterie aufweisendes Fahrzeug integriert sein oder mit diesem mittransportiert werden. Bei dem Fahrzeug kann es sich um ein Hybridfahrzeug, ein Plug-In-Hybridfahrzeug oder ein rein batterieelektrisch angetriebenes Fahrzeug handeln. Bei der Fahrzeugbatterie kann es sich zudem um eine Traktionsbatterie handeln.

Handelt es sich bei dem Mobilfunkgerät beispielsweise um ein Smartphone, so kann das Smartphone über die Fahrzeugbatterie geladen werden. Ist die Batterie des Smartphones erschöpft, so kann das Smartphone somit länger betrieben werden. Eine Übertragung elektrischer Energie an das Smartphone kann kabelgebunden oder auch kontaktlos, beispielsweise mit Hilfe von Induktion, erfolgen.

Bevorzugt wird der Abdeckungsverbesserungs-Modus aktiviert, wenn die Fahrzeugbatterie einen kritischen Ladestand unterschreitet. Hierdurch kann die Kommunikation zwischen dem Mobilfunkgerät und der Mobilfunknetzwerkbasisstation aufgrund des reduzierten Stromverbrauchs des Mobilfunkgeräts für einen längeren Zeitraum aufrechterhalten werden. Der kritische Ladestand kann dabei einen beliebigen Wert annehmen, beispielsweise 50%, 30%, 10% oder dergleichen. Somit lässt sich sicherstellen, dass die Fahrzeugbatterie eines rein batterieelektrisch angetriebenen Fahrzeugs eine ausreichende Energiereserve vorhält, damit das Fahrzeug eine Ladestation zum Wiederaufladen der Fahrzeugbatterie erreichen kann.

Eine weitere vorteilhafte Ausgestaltung des Verfahrens sieht ferner vor, dass der Abdeckungsverbesserungs-Modus aktiviert wird, wenn die kritische Temperatur überschritten wird. Hierdurch lässt sich eine Beschädigung des Mobilfunkgeräts oder einzelner Komponenten des Mobilfunkgeräts aufgrund von Überhitzung vermeiden. Bevorzugt trägt die kritische Temperatur 100°C. Das Mobilfunkgerät kann Mechanismen zur Wärmeabfuhr aufweisen wie passive und/oder aktive Kühlkörper. Lässt sich mit diesen Mechanismen das Übersteigen der kritischen Temperatur nicht mehr verhindern, so lässt sich eine Überhitzung des Mobilfunkgeräts oder einzelner Komponenten des Mobilfunkgeräts durch das Betreiben des Mobilfunkgeräts im Abdeckungsverbesserungs-Modus erreichen. Dabei können Schäden des Mobilfunkgeräts oder einzelner Komponenten wie beispielsweise Kondensatoren bereits ab einer Temperatur von 100°C auftreten. Durch den Betrieb im Abdeckungsverbesserungs-Modus gibt das Mobilfunkgerät bzw. Komponenten des Mobilfunkgeräts weniger Wärme ab. Dies erlaubt es, auf eine aktive Kühlung zu verzichten, wodurch noch mehr Energie eingespart werden kann.

Wird der Abdeckungsverbesserungs-Modus beim Unterschreiten der kritischen Temperatur aktiviert, so kann es sich bei der kritischen Temperatur auch um eine vergleichsweise kalte Temperatur, beispielsweise -50°C handeln.

Eine weitere vorteilhafte Ausgestaltung des erfindungsgemäßen Verfahrens sieht ferner vor, dass vor Erschöpfen der Fahrzeugbatterie eine mobile Elektroladetankstelle oder ein Abschleppdienst zu einem aktuellen oder künftigen Aufenthaltsort eines die Fahrzeugbatterie umfassenden Fahrzeugs gerufen wird. Hierdurch kann zum einen ein Komfort einer fahrzeugführenden Person verbessert werden, da die fahrzeugführende Person so nicht manuell eingreifen muss, um eine Energieversorgung des Fahrzeugs sicherzustellen. Dies geschieht vollautomatisch. So kann das Mobilfunkgerät selbständig eine entsprechende mobile Elektroladetankstelle oder einen Abschleppdienst informieren. Hierzu kann das Mobilfunkgerät bei Bedarf auf Fahrzeugzustandsdaten und/oder weitere Informationen zugreifen. So kann das Mobilfunkgerät auch den aktuellen und/oder künftigen Aufenthaltsort des Fahrzeugs, beispielsweise aus einem Navigationsgerät des Fahrzeugs auslesen und per Mobilfunk übermitteln. Dabei kann die Information über den künftigen Aufenthaltsort des Fahrzeugs auch mit einem Ladestand der Fahrzeugbatterie angereichert sein. So lässt sich ermitteln, an welchem Ort mit einem Unterschreiten des kritischen Ladestands der Fahrzeugbatterie zu rechnen ist.

Bevorzugt wird daraufhin die mobile Elektroladetankstelle bzw. der Abschleppdienst so zum künftigen Aufenthaltsort des Fahrzeugs gerufen, dass das Fahrzeug und die mobile Elektroladetankstelle bzw. der Abschleppdienst gleichzeitig am künftigen Aufenthaltsort eintreffen oder die Elektroladetankstelle bzw. der Abschleppdienst bereits vor Ort ist, wenn das Fahrzeug eintrifft. Dies ermöglicht ein besonders schnelles Aufladen der Fahrzeugbatterie oder eine sonstige Instandsetzung einer fehlerhaften Fahrzeugfunktion durch den Abschleppdienst oder auch ein Abschleppen des Fahrzeugs.

Generell kann das Rufen der mobilen Elektroladetankstelle oder des Abschleppdiensts auch vor Schalten in den Abdeckungsverbesserungs-Modus erfolgen.

Zur Ermittlung der aktuellen Fahrzeugposition kann das Fahrzeug beispielsweise ein Navigationsgerät aufweisen oder mit einem Navigationsgerät eines mobilen Endgeräts wie eines Smartphones kommunizieren und die Fahrzeugposition beispielsweise mit Hilfe eines globalen Satellitennavigationssystems wie GPS bestimmen. Eine künftige Aufenthaltsposition des Fahrzeugs kann durch eine in das Navigationsgerät einprogrammierte Fahrtroute bestimmt werden. Auch können Verhaltensmuster analysiert werden, wodurch besonders häufig mit dem Fahrzeug zurückgelegte Strecken bestimmt werden können. Hierdurch lässt sich abschätzen, wann und wo das Fahrzeug sich wahrscheinlich aufhalten wird, insbesondere wenn der kritische Ladestand der Fahrzeugbatterie erreicht wird.

Entsprechend einer weiteren vorteilhaften Ausgestaltung des Verfahrens wird als Mobilfunknetzwerkbasisstation eine terrestrische Einheit, eine Satelliteneinheit und/oder eine Drohneneinheit verwendet. Bei der terrestrischen Einheit kann es sich beispielsweise um eine Funkstation handeln. Bei der Drohneneinheit kann es sich beispielsweise um wenigstens eine Drohne wie einen Quadrocopter oder ein sonstiges UAV handeln. Die Drohne kann auch als Ballon ausgeführt sein. Mit Hilfe von Satelliten und Drohnen lässt sich eine Mobilfunknetzabdeckung in schwer zugänglichen oder nicht durch Infrastruktur erschlossenen Gebieten sicherstellen. Generell können sich dabei auch die von einer Mobilfunknetzwerkbasisstation mit Mobilfunk versorgten Gebiete wenigstens bereichsweise überschneiden. Die Mobilfunknetzwerkbasisstation kann eine auf elektromagnetischen Wellen basierende Kommunikation zu einem Mobilfunkgerät aufbauen. Dabei kann eine beliebige Mobilfunktechnik wie 2G bis 5G oder auch künftige Mobilfunkstandards wie 6G oder dergleichen verwendet werden. Es kann auch eine beliebige Funktechnologie wie beispielsweise WiFi, Bluetooth, Rundfunk oder dergleichen zur Kommunikation zwischen dem Mobilfunkgerät und der Mobilfunknetzwerkbasisstation verwendet werden. Aktiviert das Mobilfunkgerät den Abdeckungsverbesserungs-Modus, so beendet es eine auf einer der aufgezählten üblichen Funktechnologien basierende Kommunikation zur Mobilfunknetzwerkbasisstation. Die Kommunikation zwischen Mobilfunkgerät und Mobilfunknetzwerkbasisstation erfolgt im Abdeckungsverbesserungs-Modus also ausschließlich unter Einsatz von Coverage Enhancement.

Wird die Fahrzeugbatterie wieder aufgeladen oder wird der kritische Ladestand der Fahrzeugbatterie zu einem geringeren Wert verschoben, beispielsweise, weil ein Fahrtziel des Fahrzeugs verändert wurde, kann der Abdeckungsverbesserungs-Modus auch wieder deaktiviert und das Mobilfunkgerät wieder über einen üblichen Kommunikationsweg mit einer Mobilfunknetzwerkbasisstation kommunizieren. Es versteht sich, dass dies auch bei Unterschreiten der kritischen Temperatur erfolgen kann. So kann der Abdeckungsverbesserungs-Modus beendet werden, wenn das Mobilfunkgerät, eine Komponente des Mobilfunkgeräts und/oder die Umgebungstemperatur um das Mobilfunkgerät ausreichend abgekühlt ist.

Bei einem Fahrzeug mit wenigstens einem Mobilfunkgerät ist erfindungsgemäß das Mobilfunkgerät dazu eingerichtet, ein im vorigen beschriebenes Verfahren auszuführen. Bei dem Fahrzeug kann es sich um ein beliebiges Fahrzeug wie einen PKW, LKW, Transporter, Bus oder dergleichen handeln. Das Mobilfunkgerät oder auch mehrere Mobilfunkgeräte können fest in das Fahrzeug integriert sein oder auch mit dem Fahrzeug transportiert werden, wie beispielsweise in Form eines mobilen Endgeräts. Bei dem mobilen Endgerät kann es sich beispielsweise um ein Smartphone handeln. Mit Hilfe eines solchen Fahrzeugs und eines solchen Verfahrens lässt sich eine Übertragung kritischer Fahrzeugdaten wie beispielsweise Fahrzeugzustandsdaten an einen Fahrzeughersteller zur Fahrzeugüberwachung auch in kritischen Situationen sicherstellen. So kann auch bei einer sich leerenden Fahrzeugbatterie und/oder einer sich anbahnenden Beschädigung des Mobilfunkgeräts aufgrund von Überhitzung eine bestehende Mobilfunkkommunikation aufrechterhalten werden.
Bevorzugt ist das Mobilfunkgerät als Fahrzeug-Telekommunikationseinheit ausgeführt. Eine Fahrzeug-Telekommunikationseinheit wird typischerweise von einem Fahrzeughersteller während einer Produktion des Fahrzeugs verbaut. Hierdurch hat der Fahrzeughersteller die Möglichkeit, das Mobilfunkgerät besonders tief in das Fahrzeug zu integrieren. Dies erleichtert das Auslesen fahrzeugrelevanter Informationen wie Sensordaten und Übertragen der Sensordaten per Mobilfunk und/oder das Empfangen von Statusupdate oder Softwareupdates "Over the Air". Somit lässt sich das erfindungsgemäße Verfahren besonders leicht in einem Fahrzeug anwenden.

Bevorzugt ist das Mobilfunkgerät dazu eingerichtet:
- den Abdeckungsverbesserungs-Modus während der Fahrt, während des Stillstands, bei verriegelten Fahrzeugtüren und/oder aus einem Stand-By-Modus heraus zu aktivieren oder zu beenden; und/oder
- ein sich in einem Stand-By-Modus befindliches Fahrzeuguntersystem aufzuwecken.

Dies ermöglicht die Durchführung eines erfindungsgemäßen Verfahrens in verschiedensten Fahrsituationen. Insbesondere wird ein energieeffizientes Aufwecken eines Fahrzeuguntersystems gewährleistet. Dies ist besonders vorteilhaft bei einer nahezu erschöpften Fahrzeugbatterie.

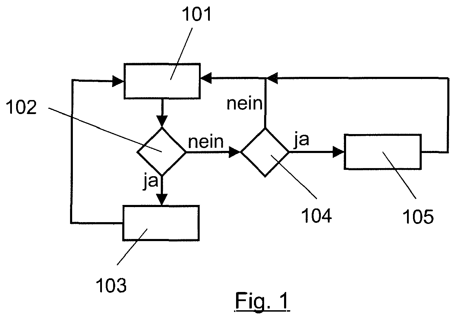

Weitere vorteilhafte Ausgestaltungen des erfindungsgemäßen Verfahrens ergeben sich auch aus dem Ausführungsbeispiel, welches nachfolgend unter Bezugnahme auf die einzige Figur näher beschrieben ist.

Dabei zeigt die einzige Figur ein Ablaufdiagramm eines erfindungsgemäßen Verfahrens.

In einem ersten Verfahrensschritt 101 erfolgt eine Überwachung eines Ladestands einer Fahrzeugbatterie sowie einer Temperatur eines Mobilfunkgeräts, einer Komponente des Mobilfunkgeräts und/oder einer Umgebungstemperatur um das Mobilfunkgerät. Dabei kann die Umgebung um das Mobilfunkgerät bis zu einem festgelegten Abstand überwacht werden. Insbesondere werden Temperatursensoren an kritischen Stellen platziert, wie beispielsweise in einem Strömungspfad, aus dem das Mobilfunkgerät Luft zur Kühlung empfängt, und/oder im Bereich temperaturempfindlicher Bauteile wie Kondensatoren.

In einem sich hieran anschließenden Verfahrensschritt 102 wird überprüft, ob ein Ladestand der Fahrzeugbatterie einen kritischen Wert unterschreitet und/oder die Temperatur des Mobilfunkgeräts, der Komponente des Mobilfunkgeräts oder eine Umgebungstemperatur um das Mobilfunkgerät einen kritischen Wert unter- oder übersteigt. Ist dies der Fall, so wird im Verfahrensschritt 103 ein Abdeckungsverbesserungs-Modus aktiviert, in welchem das Mobilfunkgerät mit einer Mobilfunknetzwerkbasisstation ausschließlich über Coverage Enhancement kommuniziert. Hierdurch verbraucht das Mobilfunkgerät weniger Strom und heizt sich durch den geringeren Stromverbrauch weniger stark auf bzw. kühlt sich ab.

Ist der Ladestand der Fahrzeugbatterie hingegen ausreichend bzw. die kritische Temperatur noch nicht erreicht, so wird im Verfahrensschritt 104 überprüft, ob der Abdeckungsverbesserungs-Modus aktiv ist. Ist dies nicht der Fall, wird die Überwachung des Batterieladestands und der Temperaturen fortgeführt. Ist der Abdeckungsverbesserungs-Modus hingegen aktiv, so kann dieser nun unter Gewährleistung von Komponentenschutz und einer sicheren Betriebsweise des Mobilfunkgeräts und des Fahrzeugs beendet werden. Dies geschieht im Verfahrensschritt 105.

## Patentansprüche

1. Verfahren zur Kommunikation wenigstens eines Mobilfunkgeräts mit einer Mobilfunknetzwerkbasisstation, wobei zumindest eine Teilmenge von zwischen dem Mobilfunkgerät und der Mobilfunknetzwerkbasisstation ausgetauschter Informationen unter Einsatz von Abdeckungsverbesserung kommuniziert wird, wobei
das Mobilfunkgerät in Abhängigkeit einer zum Betreiben des Mobilfunkgeräts zur Verfügung stehenden elektrischen Energiemenge und/oder einer kritischen Temperatur des Mobilfunkgeräts, einer Komponente des Mobilfunkgeräts und/oder einer Umgebungstemperatur um das Mobilfunkgerät, einen Abdeckungsverbesserungs-Modus aktiviert, in welchem das Mobilfunkgerät mit der Mobilfunknetzwerkbasisstation Informationen unter Einsatz von Abdeckungsverbesserung austauscht, wobei die Abdeckungsverbesserung die mehrmalige Übertragung derselben Informationen mit einer vergleichsweise geringen Sendeleistung vorsieht.

2. Verfahren nach Anspruch 1,
**dadurch gekennzeichnet, dass**
die zum Betreiben des Mobilfunkgeräts verwendete elektrische Energie von einer Fahrzeugbatterie bezogen wird.

3. Verfahren nach Anspruch 2,
**dadurch gekennzeichnet, dass**
der Abdeckungsverbesserungs-Modus aktiviert wird, wenn die Fahrzeugbatterie einen kritischen Ladestand unterschreitet.

4. Verfahren nach einem der Ansprüche 1 bis 3,
**dadurch gekennzeichnet, dass**
der Abdeckungsverbesserungs-Modus aktiviert wird, wenn die kritische Temperatur überschritten wird.

5. Verfahren nach einem der Ansprüche 1 bis 4,
**dadurch gekennzeichnet, dass**
die kritische Temperatur 100°C beträgt.

6. Verfahren nach einem der Ansprüche 2 bis 5,
**dadurch gekennzeichnet, dass**
vor Erschöpfen der Fahrzeugbatterie eine mobile Elektroladetankstelle oder ein Abschleppdienst zu einem aktuellen oder künftigen Aufenthaltsort eines die Fahrzeugbatterie umfassenden Fahrzeugs gerufen wird.

7. Verfahren nach einem der Ansprüche 1 bis 6,
**dadurch gekennzeichnet, dass**
als Mobilfunknetzwerkbasisstation eine terrestrische Einheit, eine Satelliteneinheit und/oder eine Drohneneinheit verwendet wird.

8. Fahrzeug mit wenigstens einem Mobilfunkgerät,
wobei
das Mobilfunkgerät dazu eingerichtet ist ein Verfahren nach einem der Ansprüche 1 bis 7 auszuführen.

9. Fahrzeug nach Anspruch 8,
**dadurch gekennzeichnet, dass**
das Mobilfunkgerät als Fahrzeug-Telekommunikationseinheit ausgeführt ist.

10. Fahrzeug nach Anspruch 8 oder 9,
**dadurch gekennzeichnet, dass**
das Mobilfunkgerät dazu eingerichtet ist:
- den Abdeckungsverbesserungs-Modus während der Fahrt, während des Stillstands, bei verriegelten Fahrzeugtüren und/oder aus einem Stand-by-Modus heraus zu aktivieren oder zu beenden; und/oder
- ein sich in einem Stand-by-Modus befindliches Fahrzeuguntersystem aufzuwecken.

## Claims

1. Method for communication between at least one mobile radio device and a mobile radio network base station, wherein at least a subset of information exchanged between the mobile radio device and the mobile radio network base station is communicated using coverage improvement,
wherein
the mobile device activates a coverage improvement mode depending on an amount of electrical energy available for operating the mobile radio device and/or a critical temperature of the mobile radio device, a component of the mobile radio device and/or an ambient temperature around the mobile radio device, in which mode the mobile radio device exchanges information with the mobile radio network base station using coverage improvement, wherein the coverage improvement provides for the repeated transmission of the same information with a comparatively low transmission power.

2. Method according to claim 1,
**characterized in that**
the electrical energy used to operate the mobile radio device is obtained from a vehicle battery.

3. Method according to claim 2,
**characterized in that**
the coverage improvement mode is activated when the vehicle battery falls below a critical charge level.

4. Method according to any of claims 1 to 3,
**characterized in that**
the coverage improvement mode is activated when the critical temperature is exceeded.

5. Method according to any of claims 1 to 4,
**characterized in that**
the critical temperature is 100°C.

6. Method according to any of claims 2 to 5,
**characterized in that**
before the vehicle battery is exhausted, a mobile electric charging station or a towing service is called to a current or future location of a vehicle comprising the vehicle battery.

7. Method according to any of claims 1 to 6,
**characterized in that**
a terrestrial unit, a satellite unit and/or a drone unit is used as the mobile radio network base station.

8. Vehicle comprising at least one mobile radio device,
wherein
the mobile radio device is configured to carry out a method according to any of claims 1 to 7.

9. Vehicle according to claim 8,
**characterized in that**
the mobile radio device is designed as a vehicle telecommunications unit.

10. Vehicle according to either claim 8 or claim 9,
**characterized in that**
the mobile radio device is configured to:
- activate or deactivate the coverage improvement mode while driving, while stationary, when the vehicle doors are locked and/or from a standby mode; and/or
- wake up a vehicle subsystem that is in standby mode.

## Revendications

1. Procédé de communication d'au moins un appareil de radiocommunication mobile avec une station de base de réseau de radiocommunication mobile, dans lequel au moins une quantité partielle d'informations échangées entre l'appareil de radiocommunication mobile et la station de base de réseau de radiocommunication mobile est communiquée en utilisant l'amélioration de la couverture,
dans lequel
l'appareil de radiocommunication mobile active, en fonction d'une quantité d'énergie électrique disponible pour le fonctionnement de l'appareil de radiocommunication mobile et/ou d'une température critique de l'appareil de radiocommunication mobile, d'un composant de l'appareil de radiocommunication mobile et/ou d'une température ambiante autour de l'appareil de radiocommunication mobile, un mode d'amélioration de la couverture dans lequel l'appareil de radiocommunication mobile échange des informations avec la station de base de réseau de radiocommunication mobile en utilisant une amélioration de la couverture, dans lequel l'amélioration de la couverture prévoit la transmission répétée des mêmes informations avec une puissance d'émission comparativement faible.

2. Procédé selon la revendication 1,
**caractérisé en ce que**
l'énergie électrique utilisée pour le fonctionnement de l'appareil de radiocommunication mobile provient d'une batterie de véhicule.

3. Procédé selon la revendication 2,
**caractérisé en ce que**
le mode d'amélioration de la couverture est activé lorsque la batterie de véhicule passe en dessous d'un niveau de charge critique.

4. Procédé selon l'une des revendications 1 à 3,
**caractérisé en ce que**
le mode d'amélioration de la couverture est activé lorsque la température critique est dépassée.

5. Procédé selon l'une des revendications 1 à 4,
**caractérisé en ce que**
la température critique est de 100 °C.

6. Procédé selon l'une des revendications 2 à 5,
**caractérisé en ce que**
avant que la batterie de véhicule ne soit épuisée, une station de recharge électrique mobile ou un service de remorquage est appelé(e) vers un lieu de séjour actuel ou futur d'un véhicule comprenant la batterie de véhicule.

7. Procédé selon l'une des revendications 1 à 6,
**caractérisé en ce que**
une unité terrestre, une unité de satellite et/ou une unité de drone sont utilisées comme station de base de réseau de radiocommunication mobile.

8. Véhicule comportant au moins un appareil de radiocommunication mobile,
dans lequel
l'appareil de radiocommunication mobile est conçu pour mettre en œuvre un procédé selon l'une des revendications 1 à 7.

9. Véhicule selon la revendication 8,
**caractérisé en ce que**
l'appareil de radiocommunication mobile est réalisé sous forme d'unité de télécommunication de véhicule.

10. Véhicule selon la revendication 8 ou 9,
**caractérisé en ce que**
l'appareil de radiocommunication mobile est conçu pour :
- activer ou désactiver le mode d'amélioration de la couverture pendant la conduite, à l'arrêt, lorsque les portes du véhicule sont verrouillées et/ou à partir d'un mode veille ; et/ou
- réveiller un sous-système de véhicule se trouvant en mode veille.
